# EUROPEAN PATENT APPLICATION

(11) **EP 4 822 103 A1**
(43) Date of publication of application: **14.10.2026**
(21) Application number: 25775955.5
(22) Date of filing: 26.02.2025
(51) Int. Cl.: E02F 9/24, B60R 11/02, E02F 9/26, G08B 21/02, G08B 21/24, G08B 23/00

(54) **WORK MACHINE**

(30) Priority: 26.03.2024 JP 2024050309
(71) Applicant: Hitachi Construction Machinery Co., Ltd., Tokyo 110-0015 (JP)
(72) Inventor: TOKITA Shigeki, Tsuchiura-shi, Ibaraki 300-0013 (JP); SAKAMOTO Hiroshi, Tsuchiura-shi, Ibaraki 300-0013 (JP); ISHII Takaaki, Tsuchiura-shi, Ibaraki 300-0013 (JP); KUROKAMI Kazushige, Tsuchiura-shi, Ibaraki 300-0013 (JP); FUJINAMI Takumi, Tsuchiura-shi, Ibaraki 300-0013 (JP)
(74) Representative: Manitz Finsterwald Patent- und Rechtsanwaltspartnerschaft mbB
(86) International application number: PCT/JP2025/006729
(87) International publication number: WO 2025/204449

(57) **Abstract**

Provided is a work machine including a machine body that has an operation room, a first notification device that is provided inside the operation room, a second notification device that is provided outside the operation room, an input device that sets a notification level of the second notification device, and a controller that controls the first notification device and the second notification device, in which the controller is configured to change a notification level of the first notification device in accordance with the notification level of the second notification device set by the input device. With this configuration, it is possible to set a method of notifying a surrounding worker according to a situation and to provide appropriate notification according to notification to a surrounding worker to an operator in an operation room.

## Description

### Technical Field

The present invention relates to a work machine such as a hydraulic excavator, for example.

### Background Art

A work machine such as a hydraulic excavator is provided with a function of detecting a surrounding worker and notifying an operator using sound or light in some cases. While the notification by sound is advantageous in that the operator can perceive it no matter where he or she is looking, there is a concern that, if the sound is frequently generated, the operator may feel uncomfortable, or may miss it because his or her ears become accustomed to it. On the other hand, the notification by light is suitable for conveying specific details of detected information to the operator through a display such as a monitor, but there is a case where the operator cannot notice it unless he or she pays attention to the display.

On the other hand, there has been known a peripheral monitoring system for a work machine, the system issuing a sound alarm when an object is detected and, in a case where a state in which the object is detected continues, stopping the sound alarm and issuing a light alarm under a predetermined condition (Patent Document 1).

### Prior Art Document

### Patent Document

Patent Document 1: Japanese Patent No. 7009063

### Summary of the Invention

### Problems to be Solved by the Invention

In recent years, there has been a work machine having a function of notifying not only an operator but also surrounding workers in a case of detecting a worker. By notifying surrounding workers in a case where a worker is detected, it is possible not only to alert the operator to the surroundings, but also to alert the surrounding workers to the work machine.

For example, in a case where surrounding workers are alerted by sound, since the alarm sound can also reach the ears of an operator in an operation room, when notification is performed using sound and light in the operation room as described in Patent Document 1, the notification to the operator may be excessive, and there is a risk that the discomfort of the operator increases and the work efficiency is affected.

On the other hand, in a case where the work site is, for example, a residential area, it is assumed that the notification to the surrounding workers can be turned off or the notification level can be lowered because it may become noise to the neighbors and cause a nuisance. In this case, for example, if the notification to the surrounding workers is turned off, the surrounding workers are not alerted to the work machine, and thus, it becomes even more important to alert the operator.

An object of the present invention is to provide a work machine capable of setting a method of notifying a surrounding worker according to a situation and capable of providing appropriate notification corresponding to notification to a surrounding worker to an operator in an operation room.

### Means for Solving the Problem

In order to achieve the above object, the present invention provides a work machine including a machine body that has an operation room, a first notification device that is provided inside the operation room, a second notification device that is provided outside the operation room, an input device that sets a notification level of the second notification device, and a controller configured to control the first notification device and the second notification device. The controller is configured to change a notification level of the first notification device in accordance with the notification level of the second notification device set by the input device.

### Advantages of the Invention

According to the present invention, it is possible to set a method of notifying a surrounding worker according to a situation and to provide appropriate notification corresponding to notification to a surrounding worker to an operator in an operation room.

### Brief Description of the Drawings

[FIG. 1] FIG. 1 is a side view for depicting an external appearance of a hydraulic excavator as an example of a work machine according to an embodiment of the present invention.
[FIG. 2] FIG. 2 is a schematic view for depicting an internal appearance of an operation room of the hydraulic excavator of FIG. 1.
[FIG. 3] FIG. 3 is a schematic view for depicting an entire control system of the work machine according to the embodiment of the present invention.
[FIG. 4] FIG. 4 is a block diagram for schematically depicting functions of a notification controller of the work machine according to the embodiment of the present invention.
[FIG. 5] FIG. 5 is a diagram for depicting an outline of a detection area in the embodiment of the present invention.
[FIG. 6] FIG. 6 is a diagram for depicting an example of data in a table format defining notification patterns of first notification devices and second notification devices for each notification level in the embodiment of the present invention.
[FIG. 7] FIG. 7 is a diagram for depicting another example of data in a table format defining the notification patterns of the first notification devices and the second notification devices for each notification level in the embodiment of the present invention.
[FIG. 8A] FIG. 8A is a diagram for depicting an example of monitor display determined by the notification controller of the work machine according to the embodiment of the present invention.
[FIG. 8B] FIG. 8B is a table for depicting display patterns of detection state indicator bars.
[FIG. 9A] FIG. 9A is an explanatory diagram of an example of a buzzer sound pattern determined by the notification controller of the work machine according to the embodiment of the present invention.
[FIG. 9B] FIG. 9B is an explanatory diagram of an example of a buzzer sound pattern determined by the notification controller of the work machine according to the embodiment of the present invention.
[FIG. 9C] FIG. 9C is an explanatory diagram of an example of a buzzer sound pattern determined by the notification controller of the work machine according to the embodiment of the present invention.
[FIG. 10] FIG. 10 is a flowchart for depicting a control procedure of the first notification devices and the second notification devices by the notification controller of the work machine according to the embodiment of the present invention.
[FIG. 11] FIG. 11 is a diagram for depicting an example of data in a table format defining notification modes of the first notification devices and the second notification devices for each notification level in a modified example.
[FIG. 12] FIG. 12 is a diagram for depicting another example of data in a table format defining the notification modes of the first notification devices and the second notification devices for each notification level in the modified example.
[FIG. 13] FIG. 13 is a diagram for depicting still another example of data in a table format defining the notification modes of the first notification devices and the second notification devices for each notification level in the modified example.
[FIG. 14] FIG. 14 is a diagram for depicting yet another example of data in a table format defining the notification modes of the first notification devices and the second notification devices for each notification level in the modified example.
[FIG. 15] FIG. 15 is a flowchart for depicting a setting procedure of the notification modes of the first notification devices and the second notification devices by the notification controller of the work machine according to the modified example.
[FIG. 16] FIG. 16 is a flowchart for depicting a change procedure of the notification mode of the first notification devices by the notification controller of the work machine according to the modified example.
[FIG. 17] FIG. 17 is a flowchart for depicting another example of a setting procedure of the notification modes of the first notification devices and the second notification devices by the notification controller of the work machine according to the modified example.

### Modes for Carrying Out the Invention

An embodiment of the present invention will be described below with use of the drawings.

### -Work machine-

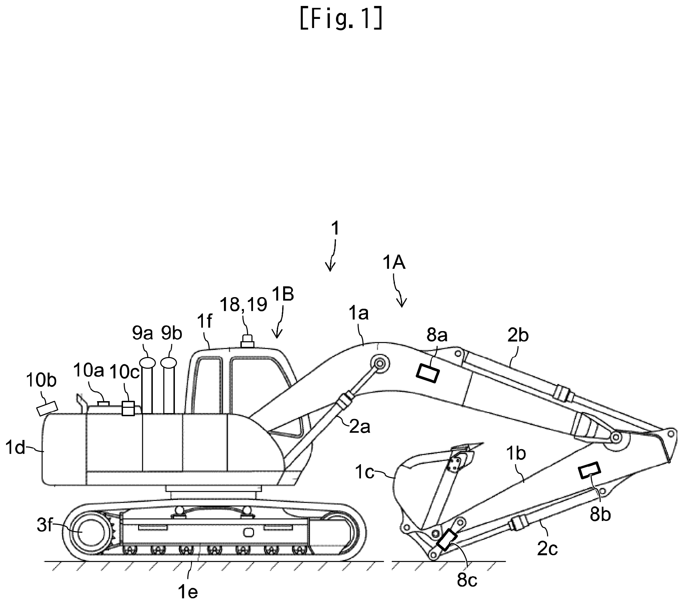

FIG. 1 is a side view for depicting an external appearance of a hydraulic excavator as an example of a work machine according to the embodiment of the present invention. It is assumed that the right side in FIG. 1 is the front of a swing structure 1d.

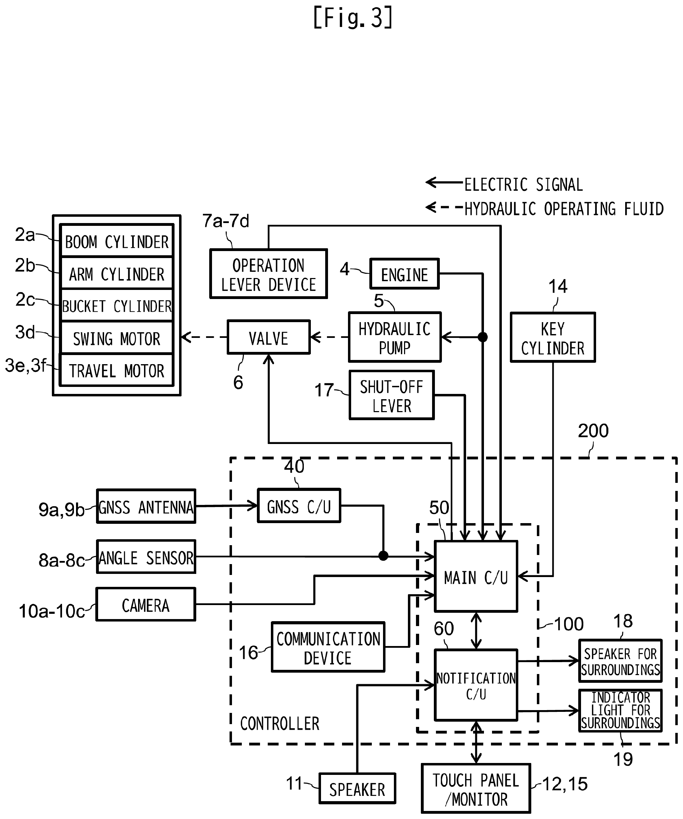

A hydraulic excavator 1 is provided with a machine body 1B and an articulated front work implement 1A attached to the machine body 1B. The front work implement 1A has a boom 1a, an arm 1b, and a bucket 1c each of which rotates in a vertical plane. The machine body 1B includes a track structure 1e and the swing structure 1d that is swingably mounted on the track structure 1e. The swing structure 1d is provided with an operation room 1f. A proximal end of the boom 1a of the front work implement 1A is coupled to the front part of the swing structure 1d, the arm 1b is coupled to a tip end of the boom 1a, and the bucket 1c is coupled to a tip end of the arm 1b. The boom 1a, the arm 1b, the bucket 1c, the swing structure 1d, and the track structure 1e are driven by corresponding hydraulic actuators, specifically, a boom cylinder 2a, an arm cylinder 2b, a bucket cylinder 2c, a swing motor 3d (FIG. 3), and left and right travel motors 3e and 3f, respectively. The boom 1a, the arm 1b, and the bucket 1c (strictly speaking, a bucket link) are provided with angle sensors 8a, 8b, and 8c for sensing the rotating angles of the boom 1a, the arm 1b, and the bucket 1c, respectively.

In addition, the swing structure 1d is provided with GNSS antennas 9a and 9b for acquiring the current position of the hydraulic excavator 1 and a plurality of cameras 10a, 10b, and 10c for capturing the surroundings of the machine body 1B. The camera 10a captures the left side of the swing structure 1d, the camera 10b captures the rear side of the swing structure 1d, and the camera 10c captures the right side of the swing structure 1d. The cameras 10a to 10c are devices for acquiring video images of the surroundings of the machine body 1B, and also function as object detection sensors for detecting objects (workers, other work machines, various types of obstacles, and the like) around the machine body 1B in the present embodiment. However, as the object detection sensor for detecting objects, a LiDAR (Light Detection and Ranging) is mounted in some cases. The LiDAR applies a large number of laser beams with optical axis angles deviated in the left-right direction (yaw direction) and the up-down direction (pitch direction), and acquires distance data (point group data) up to the irradiation point of each laser beam from the time taken until each laser beam enters after being reflected by an object.

A speaker 18 for surroundings and an indicator light 19 for surroundings are provided on the machine body 1B, that is, an upper surface of the operation room 1f in the present embodiment. The speaker 18 for surroundings and the indicator light 19 for surroundings are examples of second notification devices provided outside the operation room 1f for notifying workers around the machine body 1B. The speaker 18 for surroundings emits a buzzer sound and a voice to the surroundings, and the volume can be adjusted. The lighting color of the indicator light 19 for surroundings can be changed, and lighting patterns such as lighting, flashing, and flashing intervals can also be changed.

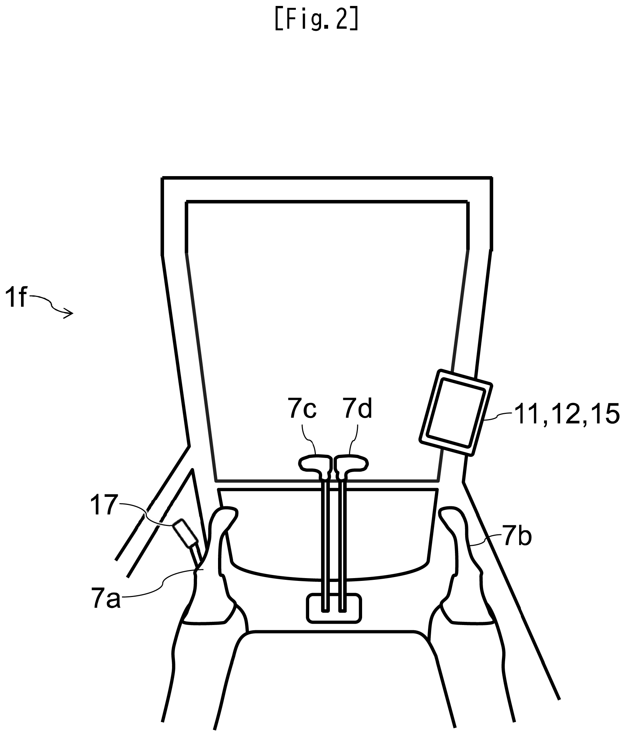

It should be noted that, although not depicted in FIG. 1, the swing structure 1d is provided with, as depicted in FIG. 3 to be described later, an engine 4 as a prime mover, a hydraulic pump 5 driven by the engine 4, and a valve 6 for controlling the flow of hydraulic fluid from the hydraulic pump 5 to a hydraulic actuator (the boom cylinder 2a or the like). The valve 6 is controlled in accordance with operations of operation lever devices 7a to 7d (FIG. 2) provided in the operation room 1f, the supply direction and the supply flow rate of the hydraulic fluid from the hydraulic pump 5 to the respective hydraulic actuators are accordingly controlled, and the respective actuators are operated. An electric motor is used in some cases as the prime mover instead of the engine 4.

### -Operation room-

FIG. 2 is a schematic view for depicting an internal appearance of the operation room 1f. In the operation room 1f, the operation lever devices 7a to 7d for operating the machine body or the front work implement 1A, a shut-off lever 17 for restricting the operations of the operation lever devices 7a to 7d, a speaker 11 for conveying information by sound to an operator in the operation room 1f, and a monitor 12 that is a display device for conveying information by light to the operator in the operation room 1f are installed. For example, when the operation lever device 7a located on the left side of a driver's seat is operated back and forth, the swing structure 1d swings left and right, and when it is operated left and right, the arm 1b rotates back and forth. When the operation lever device 7b located on the right side of the driver's seat is operated back and forth, the boom 1a rotates up and down, and when it is operated left and right, the bucket 1c rotates. The speaker 11 and the monitor 12 are examples of first notification devices provided inside the operation room 1f for notifying the operator in the operation room 1f. In the present embodiment, the speaker 11 is built in the monitor 12, but the installation position of the speaker is not limited to this as long as sound can be conveyed to the operator. In addition, as a monitor operation device for operating the monitor 12, a touch panel 15 is mounted on the monitor 12 of the present embodiment.

### -Control system-

FIG. 3 is a schematic view for depicting an entire control system of the work machine according to the embodiment of the present invention. A controller 200 for controlling each mounted equipment is mounted on the swing structure 1d of the hydraulic excavator 1. In addition to a main C/U 50 for controlling actuators and the like, the controller 200 includes a GNSS C/U 40 for processing information acquired by the GNSS antennas 9a and 9b and a notification C/U 60 for controlling various types of notification to the operator. The main C/U 50 and the notification C/U 60 are computers having a storage device (for example, an HHD, a RAM, and a ROM), a computation device (for example, a CPU), and the like.

Signals are input to the main C/U 50 from the operation lever devices 7a to 7d, the angle sensors 8a to 8c, the cameras 10a to 10c, a key cylinder 14, the shut-off lever 17, and the like. The main C/U 50 controls the engine 4, the hydraulic pump 5, and the valve 6 in accordance with these input signals, and controls the hydraulic actuator such as the boom cylinder 2a to drive the hydraulic excavator 1. The key cylinder 14 is an operation device for instructing the engine 4 to start or stop, and is installed in the operation room 1f. The shut-off lever 17 is an operation device for restricting the operations of the operation lever devices 7a to 7d as described above. In addition to a configuration in which a pilot pressure for driving the valve 6 is interrupted to hydraulically restrict the operation of the hydraulic actuator performed by the operation lever devices 7a to 7d, the shut-off lever 17 may employ a configuration in which the operation of the hydraulic actuator by the operation lever devices 7a to 7d is electrically restricted by prohibiting the main C/U 50 from outputting a command signal to the valve 6 (strictly speaking, a solenoid valve for controlling the pilot pressure to the valve 6) in accordance with the position of the shut-off lever 17. In either configuration, the position of the shut-off lever 17 is sensed by a potentiometer (not illustrated) or the like and input to the main C/U 50. In addition, a communication device 16 is also connected to the main C/U 50, which can communicate with various types of terminals, servers, and the like outside the hydraulic excavator 1 via the communication device 16.

### -Notification controller-

### (Outline of notification controller)

The notification C/U 60 exchanges data with the main C/U 50 and executes various types of processing. For example, the notification C/U 60 calculates display information to be output by the monitor 12 in the operation room 1f, a lighting pattern of the indicator light 19 for surroundings, and sound information to be output by the speaker 11 and the speaker 18 for surroundings, and sends command signals to corresponding equipment. In addition, the notification C/U 60 has a function of displaying, on the monitor 12, the operating states of the hydraulic excavator 1, a menu screen, camera video images captured by the cameras 10a to 10c, and the like in accordance with the operation of the touch panel 15.

Together with the main C/U 50, the notification C/U 60 configures a notification controller 100 for controlling the first notification devices (the speaker 11 and the monitor 12) and the second notification devices (the speaker 18 for surroundings and the indicator light 19 for surroundings). In the present embodiment, a configuration in which the function of the notification controller 100 is shared by the main C/U 50 and the notification C/U 60 is exemplified, but the function of the notification controller 100 may be provided in a single C/U (Control Unit). In the present embodiment, the touch panel 15 is used as an input device for setting notification levels of the second notification devices (the speaker 18 for surroundings and the indicator light 19 for surroundings) and the first notification devices (the speaker 11 and the monitor 12). It is obvious that the input device is not limited to the touch panel 15 and other types of input devices such as mechanical buttons can be applied. The notification controller 100 controls the first notification devices (the speaker 11 and the monitor 12) and the second notification devices (the speaker 18 for surroundings and the indicator light 19 for surroundings) on the basis of object information detected by an object detection sensor. The "object information" is detection information of the object detection sensor, which is information related to an object detected by the object detection sensor and is information acquired by processing the camera video images captured by the cameras 10a to 10c in the present embodiment, such as the type of detected object (a worker, a work machine, or the like) or the positional relation (a distance, an orientation, or the like) between the detected worker and the machine body 1B. For example, the notification controller 100 determines whether or not the object detected by the cameras 10a to 10c is a person, and in a case where the detected object is a person, the notification controller 100 performs notification by at least the first notification devices (the speaker 11 and the monitor 12), or desirably by both the first notification devices and the second notification devices.

The notification controller 100 has a function of changing the notification level of the first notification devices (the speaker 11 and the monitor 12) in accordance with the notification level of the second notification devices (the speaker 18 for surroundings and the indicator light 19 for surroundings) set by the touch panel 15. However, it does not mean that the notification level of the first notification devices is not fixed unless the operator operates the touch panel 15 to set the notification level of the second notification devices, and the first notification devices and the second notification devices are set to the notification levels of standard setting (for example, patterns A, B, and the like to be described later) before, for example, the operator sets the notification level of the second notification devices. The "notification level" is a degree of emphasis of notification for transmitting information related to the situation to notification targets (workers and the like around the hydraulic excavator 1 and the operator in the operation room 1f) or for alerting the notification targets, and is adjusted by, for example, sound made by the speaker 11 and the speaker 18 for surroundings, light emitted by the monitor 12 and the indicator light 19 for surroundings, or combinations thereof. For the sound made by the speaker 11 and the speaker 18 for surroundings, the notification level can be changed by the volume, frequency, rhythm, sound intervals, combinations thereof, and the like. For the light emitted by the monitor 12 and the indicator light 19 for surroundings, the notification level can be changed by the amount of light, lighting color, lighting intervals, lighting rhythm, combinations thereof, and the like. Turning off the notification can be considered as setting the notification level to 0.

In the present embodiment, when the notification level of the second notification devices (the speaker 18 for surroundings and the indicator light 19 for surroundings) is set to be low, the notification controller 100 sets the notification level of the first notification devices (the speaker 11 and the monitor 12) to be high. In a case where the notification level of the second notification devices is lowered by the touch panel 15, the notification controller 100 raises the notification level of the first notification devices. When the notification level of the second notification devices (the speaker 18 for surroundings and the indicator light 19 for surroundings) is set to be high, the notification controller 100 sets the notification level of the first notification devices (the speaker 11 and the monitor 12) to be low. In a case where the notification level of the second notification devices is raised by the touch panel 15, the notification controller 100 lowers the notification level of the first notification devices.

In addition, the notification controller 100 stores a plurality of notification modes of the first notification devices (the speaker 11 and the monitor 12) and the second notification devices (the speaker 18 for surroundings and the indicator light 19 for surroundings) for each notification level of the second notification devices (the speaker 18 for surroundings and the indicator light 19 for surroundings). For example, a storage device (a notification pattern storage section 105 to be described later) of the notification controller 100 stores a plurality of notification modes preliminarily set for each notification level for the first notification devices (the speaker 11 and the monitor 12) and the second notification devices (the speaker 18 for surroundings and the indicator light 19 for surroundings). As examples of the settings of the notification modes of the first notification devices, notification is performed with display by the monitor 12 and a low volume by the speaker 11 at a low notification level, and notification is performed with display by the monitor 12 and a high volume by the speaker 11 at a high notification level. As examples of the settings of the notification modes of the second notification devices, notification by both the speaker 18 for surroundings and the indicator light 19 for surroundings is turned off at a low notification level, and notification by the speaker 18 for surroundings and the indicator light 19 for surroundings is executed at a high notification level. The notification controller 100 stores the notification patterns (combinations of the notification modes) of the first notification devices and the second notification devices in the storage device (the notification pattern storage section 105 to be described later), and when the notification level of the second notification devices is set, the notification level of the first notification devices is automatically determined and set in accordance with the notification level of the second notification devices under the corresponding notification pattern. As described above, when the notification level of the second notification devices is set to be low, the notification level of the first notification devices is set to be high, and when the notification level of the second notification devices is set to be high, the notification level of the first notification device is set to be low.

More specifically, the notification controller 100 controls the first notification devices (the speaker 11 and the monitor 12) and the second notification devices (the speaker 18 for surroundings and the indicator light 19 for surroundings) on the basis of the object information detected by the cameras 10a to 10c, in addition to the notification level of the second notification devices (the speaker 18 for surroundings and the indicator light 19 for surroundings). In the present embodiment, each of the plurality of notification modes for each notification level of the first notification devices and the second notification devices is defined in accordance with the positional relation between the object detected by the cameras 10a to 10c and the machine body 1B, for example, the distance between the machine body 1B and the object, so that the notification modes vary even at the same notification level. Thus, in a case where a worker is simply detected by the cameras 10a to 10c, the first notification devices and the second notification devices do not operate in a uniform notification mode corresponding to the set notification level, but the first notification devices and the second notification devices operate in different notification modes even at the same notification level depending on the positional relation between the detected worker and the machine body 1B. For example, even at the same notification level of "high" for the first notification devices, if the distance between the detected object and the machine body 1B is less than a predetermined distance, both the monitor 12 and the speaker 11 operate, and if the distance between the detected object and the machine body 1B is equal to or more than a predetermined distance, only the monitor 12 operates. Similarly, even at the same notification level "high" for the second notification devices, if the distance between the detected object and the machine body 1B is less than a predetermined distance, both the speaker 18 for surroundings and the indicator light 19 for surroundings operate, and if the distance between the detected object and the machine body 1B is equal to or more than a predetermined distance, only the indicator light 19 for surroundings operates.

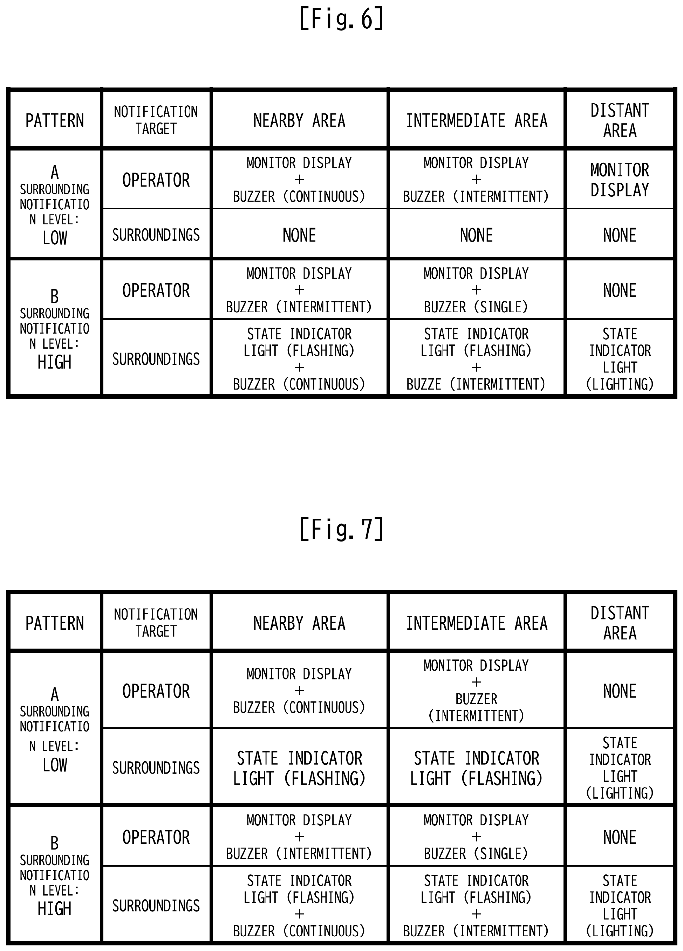

It should be noted that the notification patterns (for example, a data table to be described later with reference to FIG. 6 and the like) of the first notification devices and the second notification devices for each notification level, the notification patterns being stored in the notification pattern storage section 105, can be changed by using, for example, the touch panel 15. For example, the notification modes can include a mode in which either the first notification devices (the speaker 11 and the monitor 12) or the second notification devices (the speaker 18 for surroundings and the indicator light 19 for surroundings) are turned off. In addition, in a case where, for example, the operation site of the hydraulic excavator 1 is a residential area, a mode in which the notification by sound of the second notification device, that is, the operation of the speaker 18 for surroundings is always turned off, can be included in the notification modes.

### (Configuration example of notification controller)

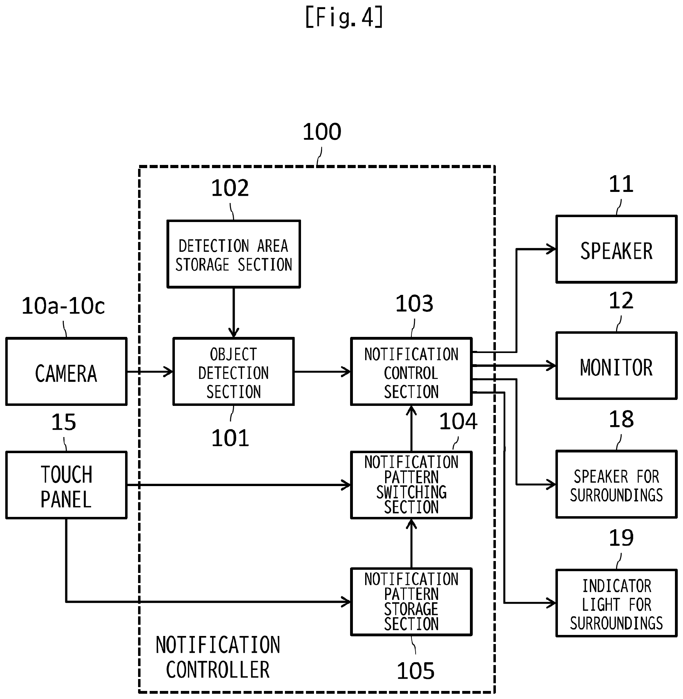

FIG. 4 is a block diagram for schematically depicting functions of the notification controller of the work machine according to the embodiment of the present invention. In order to execute the display control described above, as depicted in FIG. 4, the notification controller 100 has an object detection section 101, a detection area storage section 102, a notification control section 103, a notification pattern switching section 104, and the notification pattern storage section 105. These may be realized by hardware elements such as circuits or may be realized by software elements such as programs. For example, the object detection section 101, the notification control section 103, and the notification pattern switching section 104 are functions executed by a computation device (for example, a CPU) of the notification controller 100, and the detection area storage section 102 and the notification pattern storage section 105 are configured with a storage device (for example, an HDD) provided in or connected to the notification controller 100. Each function will be described below.

### [Object detection section]

The object detection section 101 detects an object on the basis of information acquired by the cameras 10a to 10c and information of a detection area stored in the detection area storage section 102. The object detected by the object detection section 101 is a worker (person) or a worker and an object (a work machine other than the own machine, another obstacle, or the like). In the present embodiment, it is assumed that a worker (person) around the machine body 1B is detected from video images acquired by the cameras 10a to 10c. In a case where data input from the cameras 10a to 10c is raw image data, the object detection section 101 executes image processing to detect a surrounding worker, and computes the position of the detected worker with respect to the machine body 1B. In a case where the cameras 10a to 10c are provided with image processing devices, the object detection section 101 inputs the detection result of the worker from the cameras 10a to 10c, and computes the position of the worker in a case where position information of the worker is not included in the detection result. In addition, the object detection section 101 compares the position of the detected worker with a detection area stored in the detection area storage section 102, and specifies in which detection area the detected worker is located.

It should be noted that, in the present embodiment, a configuration in which the object detection section 101 processes the image input from the on-vehicle cameras 10a to 10c is exemplified in FIG. 4, but a configuration in which the object detection section 101 specifies the position of the worker on the basis of data obtained from off-vehicle equipment (equipment installed outside the hydraulic excavator 1), for example, a worker sensing system placed at the work site or a portable terminal carried by the worker may be employed.

### [Detection area storage section]

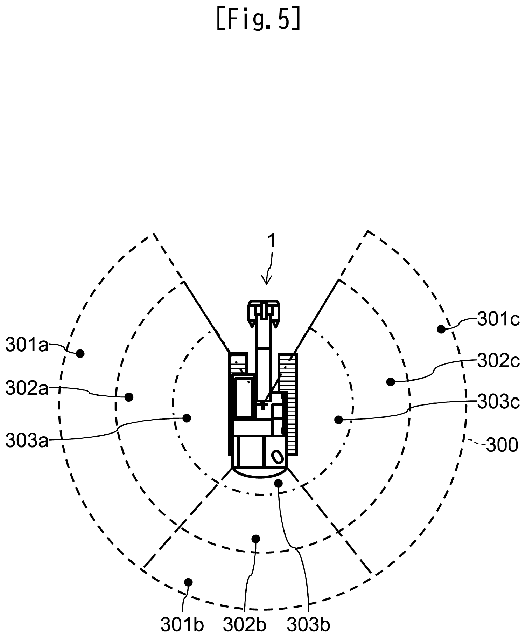

The detection area storage section 102 stores a detection area used for object detection in the object detection section 101. An outline of a detection area 300 in the present embodiment is depicted in FIG. 5. The detection area 300 is roughly divided into three concentric areas according to the horizontal distance in the radial direction from the swing center of the machine body 1B. The detection area 300 includes distant areas 301a to 301c having a distance less than a first set distance and equal to or more than a second set distance (< first set distance) from the swing center, intermediate areas 302a to 302c having a distance less than the second set distance and equal to or more than a third set distance (< second set distance) from the swing center, and nearby areas 303a to 303c having a distance less than the third set distance from the swing center. In addition, it is also possible to distinguish each of the distant areas, the intermediate areas, and the nearby areas by the orientation with respect to the machine body 1B and to specify which orientation the detected worker is located. In the example of FIG. 5, the distant area 301a, the intermediate area 302a, and the nearby area 303a are areas captured by the camera 10a, and are areas located in the left orientation with respect to the machine body 1B. In addition, the distant area 301b, the intermediate area 302b, and the nearby area 303b are areas captured by the camera 10b, and are areas located in the rear orientation with respect to the machine body 1B. The distant area 301c, the intermediate area 302c, and the nearby area 303c are areas captured by the camera 10c, and are areas located in the right orientation with respect to the machine body 1B. The detection area storage section 102 stores divisions of the detection areas with the swing center of the machine body 1B as a reference, as exemplified in FIG. 5.

### [Notification control section]

The notification control section 103 determines outputs of the first notification devices and the second notification devices in accordance with the detection result of the worker in the object detection section 101 on the basis of the currently set notification pattern. A buzzer sound to be output by the speaker 11 and display contents to be displayed on the monitor 12 are determined as the outputs of the first notification devices, and a buzzer sound to be output by the speaker 18 for surroundings and a lighting pattern of the indicator light 19 for surroundings are determined as the outputs of the second notification devices. The notification control section 103 outputs the determined notification outputs to the first notification devices (the speaker 11 and the monitor 12) and the second notification devices (the speaker 18 for surroundings and the indicator light 19 for surroundings) to execute notification to the operator and the surrounding worker.

### [Notification pattern switching section]

The notification pattern used for determining the notification outputs in the notification control section 103 is read into the notification control section 103 from the notification pattern switching section 104. When the operator sets the notification level of the second notification devices with the touch panel 15, the notification pattern switching section 104 sets the notification pattern of the second notification devices corresponding to the notification level of the second notification devices. At the same time, the notification level of the first notification devices is determined in accordance with the notification level of the second notification devices, and the notification pattern of the first notification devices corresponding to the notification level of the first notification devices is set.

### [Notification pattern storage section]

The notification pattern set by the notification pattern switching section 104 is based on data (for example, table data) stored in the notification pattern storage section 105. The data stored in the notification pattern storage section 105 can appropriately be changed by, for example, the operator or the like operates the touch panel 15 and adjusts the setting.

### - Example (1) of notification pattern

FIG. 6 is a diagram for depicting an example of data in a table format defining notification patterns of the first notification devices and the second notification devices for each notification level. Two notification levels of "low" and "high" are prepared as options for each of the first notification devices and the second notification devices, a pattern A is defined in association with the notification level "low" of the second notification devices, and a pattern B is defined in association with the notification level "high" of the second notification devices. In the data exemplified in FIG. 6, the notification modes of the first notification devices and the second notification devices are set for each of the notification levels of the second notification devices, that is, for each of the patterns A and B. In the pattern A, as compared with the pattern B, the notification level of the second notification devices is low but the notification level of the first notification devices is high. In addition, in the example of FIG. 6, the positional relation between a worker to be detected and the machine body 1B is distinguished. In this example, it is distinguished whether the area where a worker is detected is the "nearby area," "intermediate area," or "distant area," and even if the notification level is the same, the notification modes may vary depending on where the detected worker is located in the "nearby area," "intermediate area," or "distant area." It should be noted that, in the example depicted in FIG. 6, the second notification devices output notification only in a case where the notification level is "high" (pattern B), and the notification of the second notification devices is turned off when the notification level is "low" (pattern A). Thus, the operator performs a setting operation from the viewpoint of whether or not to perform notification to the surroundings by the second notification devices, so that the notification patterns at the notification level of the second notification devices and the notification level of the first notification devices corresponding to the notification level of the second notification devices are set. For example, a setting screen on which on/off of the speaker 18 for surroundings can be selected is displayed on the touch panel 15, and by selecting on/off of the speaker 18 for surroundings on the setting screen, the notification patterns of the first notification devices and the second notification devices can be set.

In the example of FIG. 6, for example, in a case where the notification level of the second notification devices is set to be "low" due to circumstances requiring consideration for the neighborhood such as a residential area, and in a case where the notification level of the second notification devices is set to be "low," the pattern A is selected, and the notification level of the first notification devices is set to be "high." In this case, when a worker is detected, neither the speaker 18 for surroundings nor the indicator light 19 for surroundings in the second notification devices performs a notification operation regardless of the position of the detected worker (instruction to stop the speaker 18 for surroundings and the indicator light 19 for surroundings). On the other hand, in the first notification devices, a notification operation corresponding to the position of the detected worker is performed. In a case where a worker is detected in the nearby area, the operator is notified by a combination of information display by the monitor 12 and a continuous buzzer sound by the speaker 11. In a case where a worker is detected in the intermediate area, the operator is notified by a combination of information display by the monitor 12 and an intermittent buzzer sound by the speaker 11. As the buzzer sound becomes intermittent, the intensity of the warning sound is reduced as compared with a case where the worker is detected in the nearby area. In a case where a worker is detected in the distant area, the operator is notified only by information display by the monitor 12, and the buzzer sound is turned off.

In the example of FIG. 6, for example, in a case where the need to notify the surroundings is high and the notification level of the second notification devices is set to be "high," the pattern B is selected, and the notification level of the first notification devices is set to be "low."

In this case, in a case where a worker is detected in the nearby area, the surroundings are notified by a combination of flashing of the indicator light 19 for surroundings and a continuous buzzer sound of the speaker 18 for surroundings. The operator is notified by a combination of information display by the monitor 12 and an intermittent buzzer sound by the speaker 11. Even in a case where a worker is detected in the same nearby area, the notification to the surroundings is emphasized but the notification to the operator is suppressed in a case where the notification level of the second notification devices is set to be "high," as compared with a case where the notification level of the second notification devices is set to be "low."

In a case where a worker is detected in the intermediate area, the surroundings are notified by a combination of flashing of the indicator light 19 for surroundings and an intermittent buzzer sound of the speaker 18 for surroundings. The operator is notified by a combination of information display by the monitor 12 and a single buzzer sound by the speaker 11. Even in a case where a worker is detected in the same intermediate area, the notification to the surroundings is emphasized but the notification to the operator is suppressed in a case where the notification level of the second notification devices is set to be "high," as compared with a case where the notification level of the second notification devices is set to be "low." In addition, in a case where a worker is detected in the intermediate area, the intensity of the notification to the surroundings and the operator is reduced even at the same notification level as compared with a case where a worker is detected in the nearby area.

In a case where a worker is detected in the distant area, the surroundings are notified only by lighting of the indicator light 19 for surroundings, and the buzzer sound of the speaker 18 for surroundings is turned off. For the operator, the information display by the monitor 12 and the buzzer sound by the speaker 11 are turned off. Even in a case where a worker is detected in the same distant area, the notification to the surroundings is emphasized but the notification to the operator is suppressed in a case where the notification level of the second notification devices is set to be "high," as compared with a case where the notification level of the second notification devices is set to be "low." In addition, in a case where a worker is detected in the distant area, the intensity of the notification to the surroundings and the operator is reduced even at the same notification level as compared with a case where a worker is detected in the intermediate area.

### - Example (2) of notification pattern

FIG. 7 is a diagram for depicting still another example of data in a table format defining notification patterns of the first notification devices and the second notification devices for each notification level. In the data exemplified in FIG. 7, patterns A and B are defined for the first notification devices and the second notification devices as in the example of FIG. 6. However, in the example of FIG. 7, the buzzer sound of the second notification device is output only in a case where the notification level is "high" (pattern B), and when the notification level is "low" (pattern A), the second notification devices perform notification only by the indicator light. Specifically, even in a case where the notification of the second notification devices is set to be "low" (pattern A), when a worker is detected in the nearby area or the intermediate area, the indicator light 19 for surroundings is allowed to flash but the speaker 18 for surroundings is not operated. In a case where a worker is detected in the distant area, the indicator light 19 for surroundings lights up but the speaker 18 for surroundings is not operated. In addition, in the pattern A of the example of FIG. 7, since the indicator light 19 for surroundings is set to light up in a case where a worker is detected in the distant area, the notification for the operator is set to be turned off. Thus, the operator performs a setting operation from the viewpoint of whether or not to perform notification to the surroundings by the sound of the second notification device, so that the notification level of the second notification devices is set, and the notification level of the first notification devices is set according to the notification level of the second notification devices. For example, a setting screen on which on/off of the notification by the speaker 18 for surroundings can be selected is displayed on the touch panel 15, and by selecting on/off of the speaker 18 for surroundings on the setting screen, the notification levels and, consequently, the notification modes of the first notification devices and the second notification devices can be set. Other settings in the example of FIG. 7 are similar to those in the example of FIG. 6.

### - Display example of monitor 12

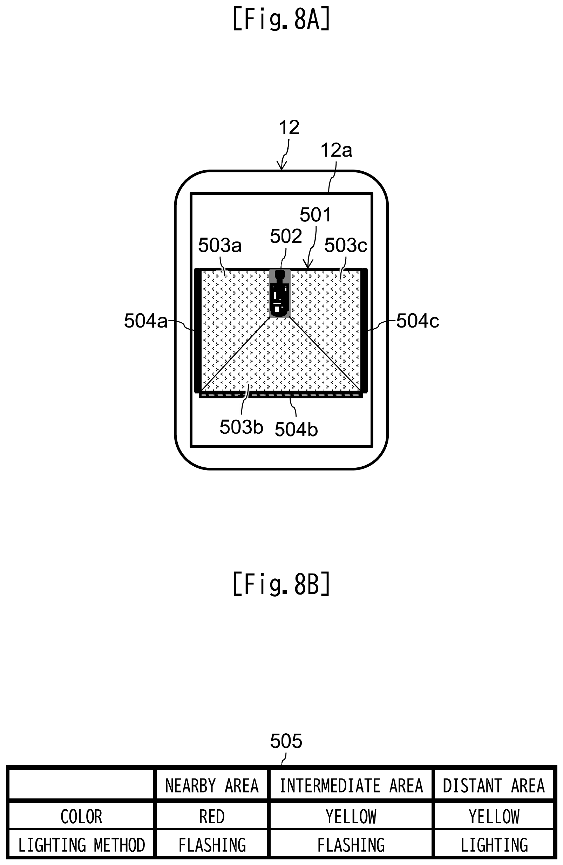

FIG. 8A is a diagram for depicting an example of monitor display determined by the notification controller 100. The monitor 12 has a liquid crystal area 12a, and a camera video image 501 is displayed in the liquid crystal area 12a. In the camera video image 501, a machine body icon 502 imitating the hydraulic excavator 1 and an overhead video image projected as if looking down at the hydraulic excavator 1 from above. The overhead video image is obtained by synthesizing a left camera video image 503a captured by the camera 10a, a rear camera video image 503b captured by the camera 10b, and a right camera video image 503c captured by the camera 10c. Detection state indicator bars 504a to 504c are displayed at the outer edges of the camera video images 504a, 504b, and 504c, respectively. The display of the detection state indicator bars 504a to 504c changes depending on which area of the detection area 300 (FIG. 5) the worker has been detected. Specifically, the detection state indicator bars 504a to 504c indicate the orientations (left, rear, and right) of the detected worker with respect to the machine body 1B, and in a case where the worker is detected, only the indicator bar corresponding to the detected area lights up. The lighting patterns of the detection state indicator bars 504a to 504c vary depending on which of the "distant area," "intermediate area," or "nearby area" the worker has been detected.

The display patterns of the detection state indicator bars 504a to 504c are depicted in a table 505 of FIG. 8B. FIG. 8B exemplifies a case where all of the detection state indicator bars 504a to 504c are set to flash in red in a case where a worker is detected in the "distant area," to flash in yellow in a case where a worker is detected in the "intermediate area," and to light up in yellow in a case where a worker is detected in the "nearby area."

### - Display example of indicator light 19 for surroundings

It is assumed that, as the lighting patterns of the indicator light 19 for surroundings, there are, for example, two patterns of lighting and flashing. However, the lighting patterns of the indicator light 19 for surroundings are not limited to only the two patterns of lighting and flashing, and the number of lighting patterns can be increased according to the number of matters to be notified, by appropriately combining differences in flashing intervals, lighting colors, brightness, and the like. In addition, although FIG. 1 exemplifies a configuration in which only one indicator light 19 for surroundings is installed on the operation room 1f, the number and position thereof can appropriately be changed in consideration of visibility from the surroundings.

### - Example of buzzer sound of speaker 11/speaker 18 for surroundings

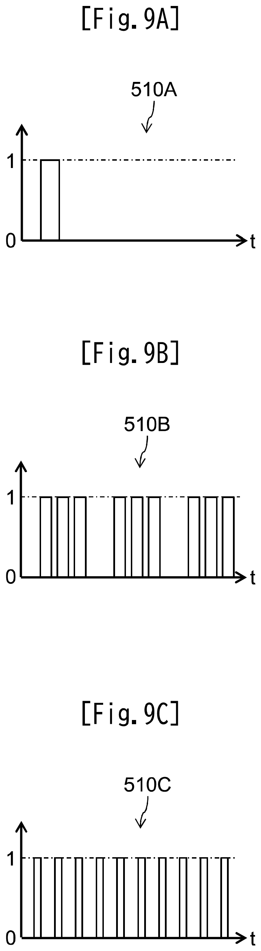

FIG. 9A to FIG. 9C are explanatory diagrams of examples of buzzer sound patterns determined by the notification controller 100. Each of graphs depicted in FIG. 9A to FIG. 9C depicts on/off (on = 1 and off = 0) of the buzzer sound on the vertical axis and time (t) on the horizontal axis. In the present embodiment, regarding the single buzzer sound (for example, the case of pattern B/operator/intermediate area in FIG. 6), the speaker 11 or the speaker 18 for surroundings is controlled and the single buzzer sound is output in accordance with the pattern of a graph 510A (FIG. 9A). Regarding the intermittent buzzer sound (for example, the case of pattern

A/operator/intermediate area in FIG. 6), the speaker 11 or the speaker 18 for surroundings is controlled and the intermittent buzzer sound is output in accordance with the pattern of a graph 510B (FIG. 9B). Regarding the continuous buzzer sound (for example, the case of pattern A/operator/nearby area in FIG. 6), the speaker 11 or the speaker 18 for surroundings is controlled and the continuous buzzer sound is output in accordance with the pattern of a graph 510C (FIG. 9 C). In a case where a plurality of workers are detected, notification is performed by the pattern of the buzzer sound corresponding to the position of the worker closest to the machine body 1B.

### -Notification control-

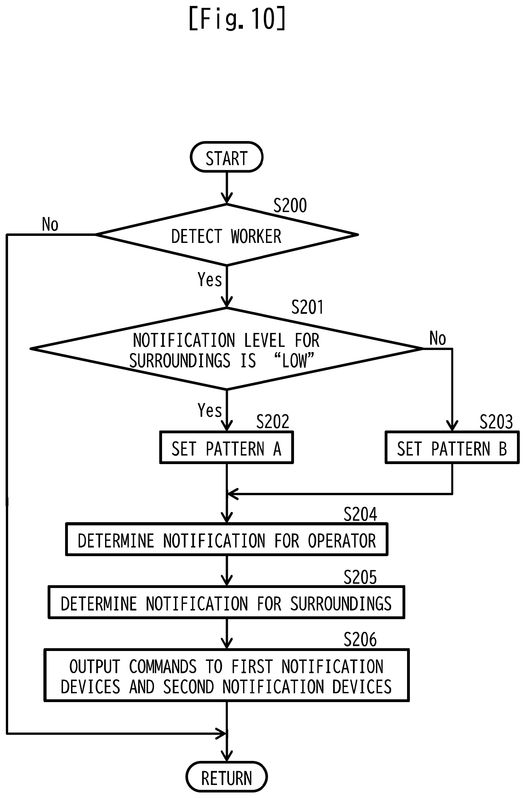

FIG. 10 is a flowchart for depicting a control procedure of the first notification devices and the second notification devices by the notification controller 100. The notification controller 100 periodically and repeatedly executes the flow of FIG. 10 during energization.

When the flow of FIG. 10 is started, the notification controller 100 first determines in Step S200 whether a worker has been detected in the detection area 300 by the cameras 10a to 10c. In a case where no worker has been detected by the cameras 10a to 10c, the notification controller 100 processes the captured images input from the cameras 10a to 10c, to execute recognition processing of a worker (person), and determines whether the worker has been detected in the detection area 300. In a case where no worker has been detected in the detection area 300 (No), the notification controller 100 repeats the processing of Step S200.

In a case where a worker has been detected in the detection area 300 (Yes), the notification controller 100 moves the procedure from Step S200 to Step S201, determines the currently set notification level for surroundings (of the second notification devices), and moves the procedure from Step S201 to processing corresponding to the currently set notification level for surroundings. In the case of the example of FIG. 10, the notification controller 100 moves the procedure from Step S201 to Step S202 when the notification level for surroundings is "low" (Yes), and moves the procedure from Step S201 to Step S203 when the notification level for surroundings is "high" (No). Here, a case where two options of the notification level are "low" or "high" is explained, but even in a case where there are, for example, three or more options of the notification level, the procedure moves to the processing corresponding to the currently set notification level.

In a case where the procedure moves to Step S202, the notification controller 100 sets the pattern A according to the data (for example, FIG. 6) stored in the notification pattern storage section 105 (FIG. 4), and moves the procedure to Step S204. By setting the pattern A, the notification mode in which the notification level for the second notification devices is "low" and the notification level for the first notification devices is "high" is set. In a case where the procedure moves to Step S203, the notification controller 100 sets the pattern B according to the data table in the same manner, and moves the procedure to Step S204. By setting the pattern B, the notification mode in which the notification level for the second notification devices is "high" and the notification level for the first notification devices is "low" is set.

When the procedure moves to Step S204, the notification controller 100 determines the notification mode of the first notification devices according to the notification pattern set in Step S202 or S203. At this time, in a case where the position of the detected worker is distinguished as in the example of, for example, FIG. 6, the notification controller 100 changes the notification mode of the first notification devices according to the area where the worker has been detected. Further, in a case where the orientation of the detected worker is distinguished as in the example of FIG. 8B, the notification controller 100 changes the notification mode (lighting colors or lighting/flashing of the detection state indicator bars 504a to 504c) of the first notification device (the monitor 12 in the example of FIG. 8B) according to the orientation where the worker has been detected.

In Step S205 that follows, the notification controller 100 determines the notification mode of the second notification devices according to the notification pattern set in Step S202 or S203. At this time, in a case where the position of the detected worker is distinguished as in the example of, for example, FIG. 6, the notification controller 100 changes the notification mode of the second notification devices according to the area where the worker has been detected. The execution order of the processing of Steps S204 and S205 may be reversed or may be performed simultaneously.

When the notification modes of the first notification devices and the second notification devices are determined in Steps S204 and S205, the notification controller 100 moves the procedure to Step S206 and outputs commands to the first notification devices and the second notification devices such that the notification operation is performed in the determined notification modes.

When the commands are output to the first notification devices and the second notification devices, the notification controller 100 returns the procedure to Step S200 to repeatedly execute the above procedure, and appropriately performs delay processing or the like to terminate the flow of FIG. 10 when the power is turned off.

### -Effects-

(1) In the present embodiment, the notification level of the first notification devices is determined in accordance with the notification level of the second notification devices set by the touch panel 15. Depending on whether the notification level of the second notification devices is set to be low or high (for example, whether the notification of the second notification devices is turned off or on), the notification level of the first notification devices is automatically changed.

In a case where the notification level of the second notification devices is set to be high, it is possible to notify a surrounding worker of being close to the hydraulic excavator 1 by, for example, the buzzer sound of the speaker 18 for surroundings or the light of the indicator light 19 for surroundings in a combined or emphasized manner to alert the worker. In this case, since the fact that the hydraulic excavator 1 and the surrounding worker are close to each other is also shared with the worker, it is possible to lower the notification level for the operator in the operation room 1f by, for example, suppressing the buzzer volume of the speaker 11 output together with the display of the monitor 12 and to improve the workability by reducing the troublesomeness of the operator.

On the other hand, in a case where the notification level of the second notification devices is set to be low, alerting to the surrounding worker is reduced or not performed. In this case, since the degree of understanding of the distance between the surrounding worker and the hydraulic excavator 1 may be reduced, the notification level for the operator in the operation room 1f is raised by, for example, raising the buzzer volume of the speaker 11 output together with the display of the monitor 12, to notify the operator in a more emphasized manner, so that alerting can be enhanced.

As described above, according to the present embodiment, by automatically changing the notification setting for the operator in accordance with the notification setting for the surrounding worker, it is possible to set the method of notification for the surrounding worker according to the situation, and at the same time, it is possible to notify the operator in the operation room 1f in accordance with the notification for surroundings. Since the operator can be notified of the surrounding situation at an appropriate level, it becomes easy for the operator to understand the surrounding situation, and further, it is possible to contribute to improvement of work efficiency by reducing the troublesomeness of the operator due to excessive notification.

(2) Since the notification level of the first notification devices is raised when the notification level of the second notification devices is lowered, even if the intensity of alerting the surrounding worker to the hydraulic excavator 1 is reduced, the intensity of alerting the operator to the surrounding worker is enhanced, and the operator's level of alertness can be raised. Conversely, since the notification level of the first notification devices is lowered when the notification level of the second notification devices is raised, the intensity of alerting the surrounding worker to the hydraulic excavator 1 is enhanced. In this case, since both the operator and the surrounding worker are alerted to each other, the intensity of the notification to the operator is reduced to reduce the discomfort of the operator, and it is possible to improve the work efficiency.

(3) The notification controller 100 stores the notification modes of the first notification devices and the second notification devices for each notification level of the second notification devices, and controls the first notification devices and the second notification devices on the basis of the notification level of the notification devices and the object information to be detected, by referring to the stored notification modes. The behavior of the first notification devices and the second notification devices when a worker is detected can preliminarily be defined as a pattern, for example, by a data table, the notification control by the notification controller 100 can be stabilized, and the program of the notification controller 100 can be made easier.

(4) By defining a plurality of different modes in accordance with the positional relation between a worker to be detected and the machine body 1B as the notification modes, for example, notification in a case where a worker is detected at a position relatively close to the machine body 1B can be emphasized as compared with a case where a worker is detected at a position relatively far from the machine body 1B. In other words, in a case where a worker is detected at a position close to the machine body 1B, notification is emphasized, while in a case where a worker is detected at a position away from the machine body 1B by a predetermined distance or more, the notification intensity can be reduced to a confirmatory degree. Thus, more flexible notification can be performed according to the situation.

(5) In addition, the notification modes written in the notification pattern storage section 105 can be changed by the touch panel 15. Therefore, the operator or the like can finely adjust the settings of the notification modes of the first notification devices and the second notification devices for each notification level after the fact, and it is possible to set flexible notification modes suitable for the circumstance of the actual operation site.

(6) The notification modes can be set in advance or after the fact, and it is also possible to include a mode in which either the first notification devices or the second notification devices are turned off. Therefore, the operator can easily set appropriate notification from the viewpoint of, for example, whether the notification by the second notification devices is turned off or on (FIG. 6). In addition, in a case where the notification by the second notification devices is performed when a worker is detected in the distant area, it is also possible to set the notification by the first notification devices to be turned off (FIG. 7).

(7) The notification modes can be set in advance or after the fact, and it is also possible to include a mode in which the notification by the sound of the second notification device is always turned off. Therefore, the operator can select, for example, a mode in which the notification by light to the surroundings is enabled but the notification by sound is always turned off (FIG. 7).

(8) In a case where a worker (person) is detected, the notification controller 100 activates the second notification devices. In a case where the object detected by the cameras 10a to 10c is an obstacle such as a rock, it is useless to notify the surroundings, and thus, by employing a configuration in which the second notification devices are activated in a case where a worker is detected, useless alarms can be omitted. However, in a case where the detected object is, for example, a work machine, an alarm to the operator in the work machine is meaningful. Therefore, even in a case where an object, such as a work machine, capable of carrying the operator is detected, a configuration in which the second notification devices are activated may be employed.

### -Modified example-

The present invention is not limited to the above embodiment, but may include various modified examples. For example, the present invention is not necessarily limited to a configuration including all the configurations described in each embodiment. For example, some configurations can be replaced with other configurations. In addition, some configurations of the embodiment can be deleted, or other configurations can be added. For example, although the hydraulic excavator 1 equipped with the plurality of cameras 10a to 10c has been described as an example, the present invention is also applicable to a hydraulic excavator 1 equipped with only one camera. In addition, although the hydraulic excavator 1 has been described, as an example, as a construction machine to which the invention is applied, the present invention is also applicable to other construction machines such as wheel loaders.

In addition to the above, for example, although an example in which the patterns A and B of the combination of the notification modes of the first notification devices and the second notification devices are preliminarily defined for each notification level of the second notification devices has been described, the present invention is not limited to this example. For example, it is also possible to employ a configuration in which only the notification modes for each notification level are preliminarily defined for the first notification devices and the second notification devices (the patterns A and B are not set) and the notification controller 100 sets the notification level of the first notification devices each time in accordance with the notification level of the second notification devices set by the operator. Hereinafter, an example of data of the notification modes in this case and an example of a flowchart will sequentially be described.

### - Example (1) of notification mode

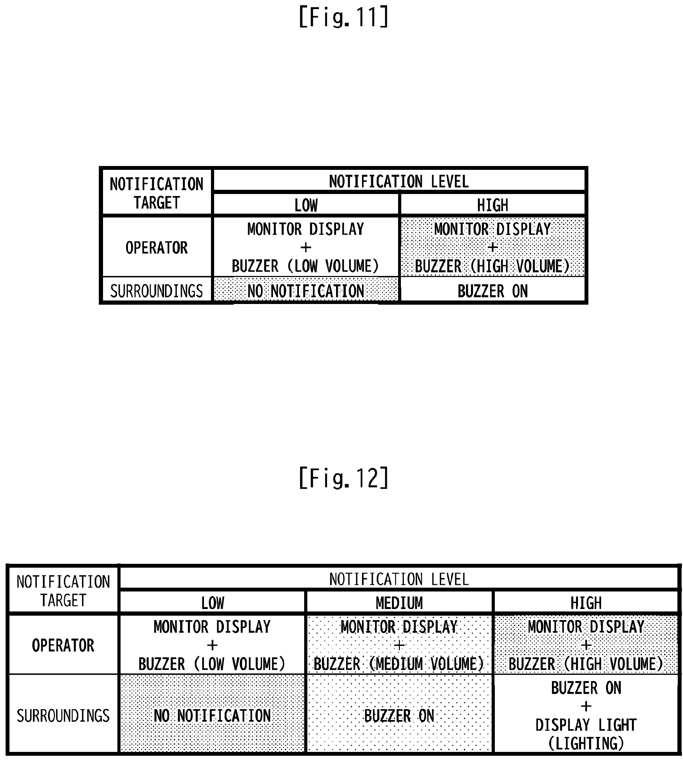

FIG. 11 is a diagram for depicting an example of data in a table format defining the notification modes of the first notification devices and the second notification devices for each notification level in a modified example. In the data exemplified in FIG. 11, two notification levels of "low" and "high" are defined for both the first notification devices and the second notification devices, and the notification modes of the first notification devices and the second notification devices are set for each of the notification levels of "low" and "high." In the example of the drawing, the positional relation between a worker to be detected and the machine body 1B is not distinguished. For the first notification devices, the buzzer sound output in parallel with the monitor display is set to be small at the notification level of "low," while the buzzer sound output in parallel with the monitor display is set to be large (< small) at the notification level of "high," and the degree of notification to the operator is set relatively higher than that at the notification level of "low." For the second notification devices, notification by both the sound and light is turned off at the notification level of "low," while notification by the sound is performed at the notification level of "high" although notification by the light is turned off, and the degree of notification to the surroundings is set relatively higher than that at the notification level of "low." In addition, in the example of FIG. 11, as in the example of FIG. 6, the second notification devices output the notification only at the notification level of "high," and the notification of the second notification devices is turned off at the notification level of "low." Therefore, the operator sets whether or not the notification to the surroundings by the second notification devices is performed, so that the notification level of the second notification devices is set, and the notification level of the first notification devices is set in accordance with the notification level of the second notification devices. For example, in a case where the notification of the second notification devices is set to be off (notification level "low"), the notification level of the first notification devices is set to be "high," and in a case where the notification of the second notification devices is set to be on (notification level "high"), the notification level of the first notification devices is set to be "low."

In the example of FIG. 11, in a case where the notification level of the second notification devices is set to be "low," the notification mode at the notification level of "low" for the second notification devices is read into the notification control section 103 via the notification pattern switching section 104. At the same time, as the notification level of the second notification devices is set to be "low," the notification level of the first notification devices is set to be "high," and the notification mode at the notification level of "high" for the first notification devices is read into the notification control section 103 via the notification pattern switching section 104. Under this setting, when a worker is detected, a signal for commanding a notification operation is not output from the notification control section 103 to the second notification devices (the speaker 18 for surroundings and the indicator light 19 for surroundings), and notification to the worker or the like around the machine body 1B is not performed. Instead, when a worker is detected, a command for outputting a high-volume buzzer sound is issued from the notification control section 103 to the speaker 11, and a command for displaying information indicating that a worker has been detected and the position of the worker is issued to the monitor 12, so that notification at the notification level of "high" is executed for the operator in the operation room 1f.

On the other hand, in the example of FIG. 11, in a case where the notification level of the second notification devices is set to be "high," the notification mode at the notification level of "high" for the second notification devices is read into the notification control section 103 via the notification pattern switching section 104. At the same time, as the notification level of the second notification devices is set to be "high," the notification level of the first notification devices is set to be "low," and the notification mode at the notification level of "low" for the first notification devices is read into the notification control section 103 via the notification pattern switching section 104. Under this setting, when a worker is detected, a signal for commanding a notification operation is not output from the notification control section 103 to the indicator light 19 for surroundings, but a command for outputting a buzzer sound is issued to the speaker 18 for surroundings, and notification by a buzzer sound is performed for the worker or the like around the machine body 1B. Instead, when a worker is detected, a command for displaying information is issued from the notification control section 103 to the monitor 12, but the speaker 11 sounds at a low volume as compared with the buzzer sound at the notification level of "high," and notification is executed for the operator at the notification level of "low" in which the buzzer sound forcibly entering the ears is suppressed in the operation room 1f.

### - Example (2) of notification mode

FIG. 12 is a diagram for depicting another example of data in a table format defining the notification modes of the first notification devices and the second notification devices for each notification level in the modified example. In the data exemplified in FIG. 12, three notification levels of "low," "medium," and "high" are defined for the first notification devices and the second notification devices, and the notification modes of the first notification devices and the second notification devices are set for each of the notification levels of "low," "medium," and "high." Even in the example of the drawing, the positional relation between a worker to be detected and the machine body 1B is not distinguished. The notification levels are not limited to two as in the example of FIG. 11, and may be subdivided into three or more as in this example. In the case of this example, in a case where, for example, the notification level of the second notification devices is set to be "low," the notification level of the first notification devices is set to be "high," and in a case where the notification level of the second notification devices is set to be "high," the notification level of the first notification devices is set to be "low." Further, in a case where the notification level of the second notification device is set to be "medium," the notification level of the first notification devices is also set to be "medium." Other points are similar to the example of FIG. 11.

### - Example (3) of notification mode

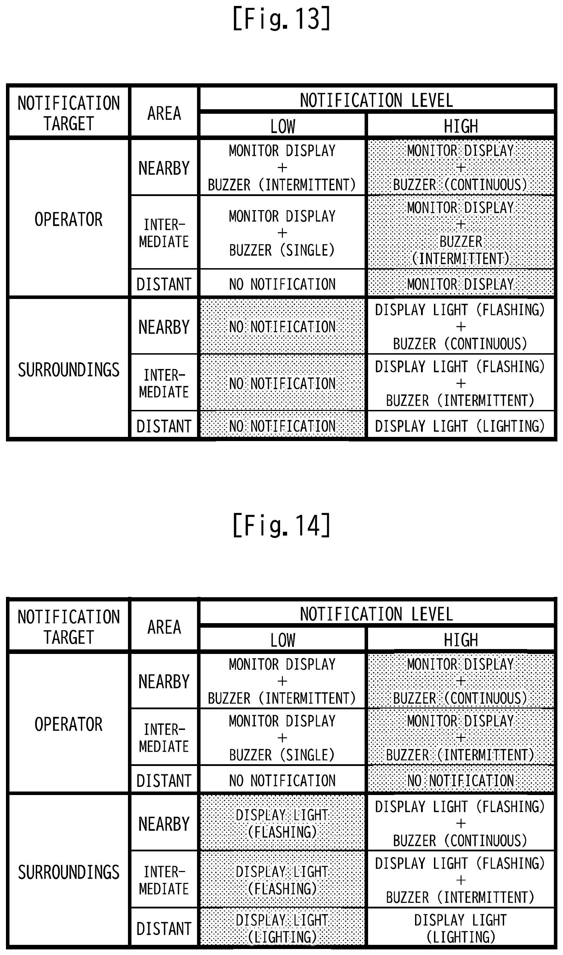

FIG. 13 is a diagram for depicting still another example of data in a table format defining the notification modes of the first notification devices and the second notification devices for each notification level in the modified example. In the data exemplified in FIG. 13, as in the example of FIG. 11, two notification levels of "low" and "high" are defined for both the first notification devices and the second notification devices, and the notification modes of the first notification devices and the second notification devices are set for each of the notification levels of "low" and "high." In this example, as in the examples of FIG. 6 and FIG. 7, the positional relation between a worker to be detected and the machine body 1B is distinguished. In addition, the settings of the notification modes of the first notification devices and the second notification devices for each notification level correspond to the example of FIG. 6. In the example of FIG. 13, as in the example of FIG. 11, the second notification devices output the notification only at the notification level of "high," and the notification of the second notification devices is turned off at the notification level of "low." Therefore, the operator sets whether or not the notification to the surroundings by the second notification devices is performed, so that the notification level of the second notification devices is set, and the notification level of the first notification devices is set in accordance with the notification level of the second notification devices. Specifically, in a case where the notification level of the second notification devices is set to be "low," the notification level of the first notification devices is set to be "high," and in a case where the notification level of the second notification devices is set to be "high," the notification level of the first notification devices is set to be "low."

### - Example (4) of notification mode

FIG. 14 is a diagram for depicting yet another example of data in a table format defining the notification modes of the first notification devices and the second notification devices for each notification level in the modified example. In the data exemplified in FIG. 14, as in the example of FIG. 13, two notification levels of "low" and "high" are defined for both the first notification devices and the second notification devices, and further, the notification modes of the first notification devices and the second notification devices are set in accordance with the positional relation between a worker to be detected and the machine body 1B for each of the notification levels of "low" and "high." In this example, as in the examples of FIG. 6 and FIG. 7, the positional relation between a worker to be detected and the machine body 1B is distinguished. In addition, the settings of the notification modes of the first notification devices and the second notification devices for each notification level correspond to the example of FIG. 7. In the example of FIG. 14, the buzzer sound of the second notification device is output only at the notification level of "high," and the second notification device performs notification only by the indicator light at the notification level of "low." Therefore, the operator sets whether or not the notification to the surroundings by the sound of the second notification device is performed, so that the notification level of the second notification devices is set, and the notification level of the first notification devices is set in accordance with the notification level of the second notification devices. For example, in a case where the notification by the sound of the second notification device is set to be off (notification level "low"), the notification level of the first notification devices is set to be "high," and in a case where the notification by the sound of the second notification device is set to be on (notification level "high"), the notification level of the first notification devices is set to be "low."

### - Example (1) of notification setting

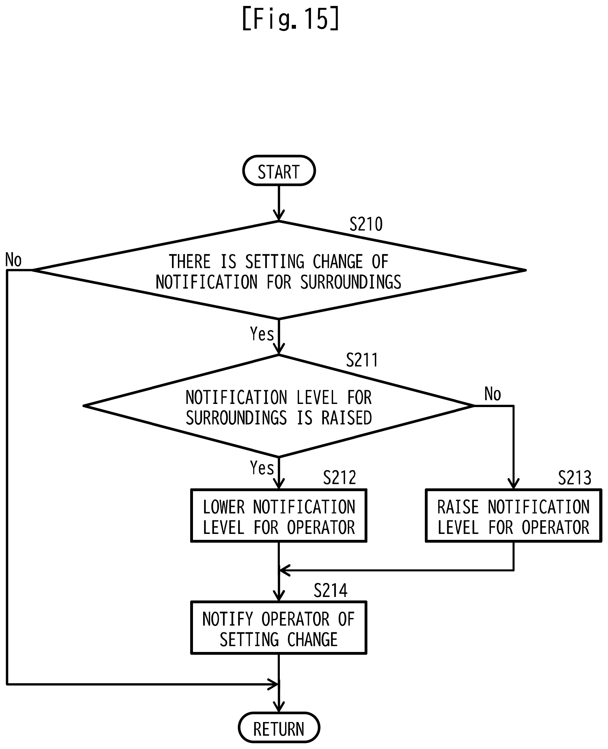

FIG. 15 is a flowchart for depicting a setting procedure of the notification modes of the first notification devices and the second notification devices by the notification controller 100 according to the modified example. The notification controller 100 periodically and repeatedly executes the flow of FIG. 15 during energization. The flowchart of FIG. 15 corresponds to the settings of the patterns in Steps S201 to S203 in the flowchart of FIG. 10 of the first embodiment, and the processing related to the notification control therebefore and thereafter is similar to that of FIG. 10.

When the flow of FIG. 15 is started, the notification controller 100 first determines in Step S210 whether the notification level of the second notification devices has been changed by the touch panel 15. In a case where the notification level of the second notification devices has not been changed (No), the notification controller 100 repeats the processing of Step S210.

In a case where the notification level of the second notification devices has been changed (Yes), the notification controller 100 moves the procedure from Step S210 to Step S211 to determine whether the change is to raise the notification level of the second notification devices. When the setting of the notification level of the second notification devices has been raised (Yes), the notification controller 100 moves the procedure from Step S211 to Step S212, and when the setting of the notification level of the second notification devices has been lowered (No), the procedure is moved from Step S211 to Step S213.

In a case where the procedure is moved to Step S212, the notification controller 100 refers to the data table (for example, FIG. 11) and lowers the setting of the notification level of the first notification devices from the current setting in accordance with the rise of the notification level of the second notification devices, and moves the procedure to Step S214. In a case where the procedure is moved to Step S213, the notification controller 100 refers to the data table (for example, FIG. 11) and raises the setting of the notification level of the first notification devices from the current setting in accordance with the lowering of the notification level of the second notification devices, and moves the procedure to Step S214.

When the procedure is moved to Step S214, the notification controller 100 outputs the fact that the notification setting has been changed to the monitor 12 to inform the operator, returns the procedure to Step S210 to repeatedly execute the above procedure, and terminates the flow of FIG. 15 after delay processing or the like is appropriately performed when the power is turned off. The notification control is executed under the notification setting performed in Step S212 or S213.

### - Example (2) of notification setting

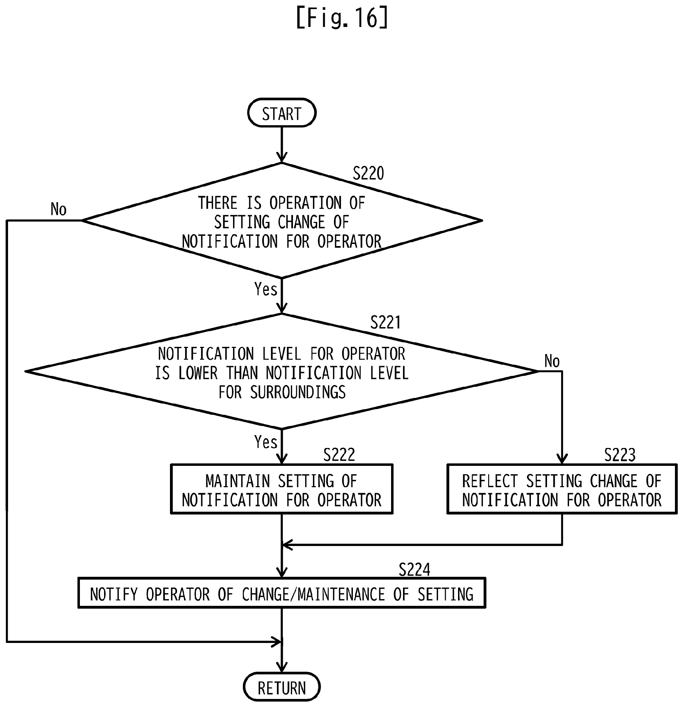

FIG. 16 is a flowchart for depicting a change procedure of the notification mode of the first notification devices by the notification controller 100 according to the modified example. As in the above embodiment, the notification controller 100 sets the notification level of the first notification devices in accordance with the setting of the notification level of the second notification devices, but the setting of the notification level of the first notification devices by the touch panel 15 is not completely impossible by the operator, and can be permitted in a case where certain conditions are satisfied. Specifically, in this example, the notification level of the first notification devices can be set by the touch panel 15, and in a case where an operation for setting the notification level of the first notification devices is performed by the touch panel 15, the notification controller 100 permits the setting of the notification level of the first notification devices only in a case where the notification level of the first notification devices is higher than the already set notification level of the second notification devices. The flowchart of FIG. 16 is periodically executed in parallel with the flowchart of FIG. 10 or FIG. 15, and is executed in a case where an operation for changing the notification level of the first notification devices is performed by the touch panel 15 in a state where the notification level of the first notification devices is set together with the notification level of the second notification devices in accordance with the notification level of the second notification devices or by the standard setting.

When the flow of FIG. 16 is started, the notification controller 100 first determines in Step S220 whether an operation for changing the notification level of the first notification devices has been performed by the touch panel 15. In a case where the operation for changing the notification level of the first notification devices has not been performed (No), the notification controller 100 repeats the processing of Step S220.

In a case where the operation for changing the notification level of the first notification devices has been performed (Yes), the notification controller 100 moves the procedure from Step S220 to Step S221 and determines whether the operation is intended to set the notification level of the first notification devices to be lower than the currently set notification level of the second notification devices. In a case where the notification level of the first notification devices related to the operation is lower than the currently set notification level of the second notification devices (Yes), the notification controller 100 moves the procedure from Step S221 to Step S222, and in a case where the notification level of the first notification devices related to the operation is equal to or more than the currently set notification level of the second notification devices (No), the procedure is moved from Step S221 to Step S223.

In a case where the procedure is moved to Step S222, the notification controller 100 ignores the operation for changing the setting of the notification level of the first notification devices, maintains the setting of the current notification level of the first notification devices, and moves the procedure to Step S224. In a case where the procedure is moved to Step S223, the notification controller 100 accepts the operation for changing the setting of the notification level of the first notification devices, changes the setting of the notification level of the first notification devices in accordance with the operation, and moves the procedure to Step S224.

When the procedure is moved to Step S224, the notification controller 100 outputs to the monitor 12 the fact that the notification setting has been maintained or changed to inform the operator, returns the procedure to Step S220, and repeats the above procedure.

In the case of this example, for example, in a case where the notification level of the first notification devices is automatically set lower than the intention of the operator in accordance with the setting of the notification level of the second notification devices, the notification level of the first notification devices can manually be raised.

### - Example (3) of notification setting

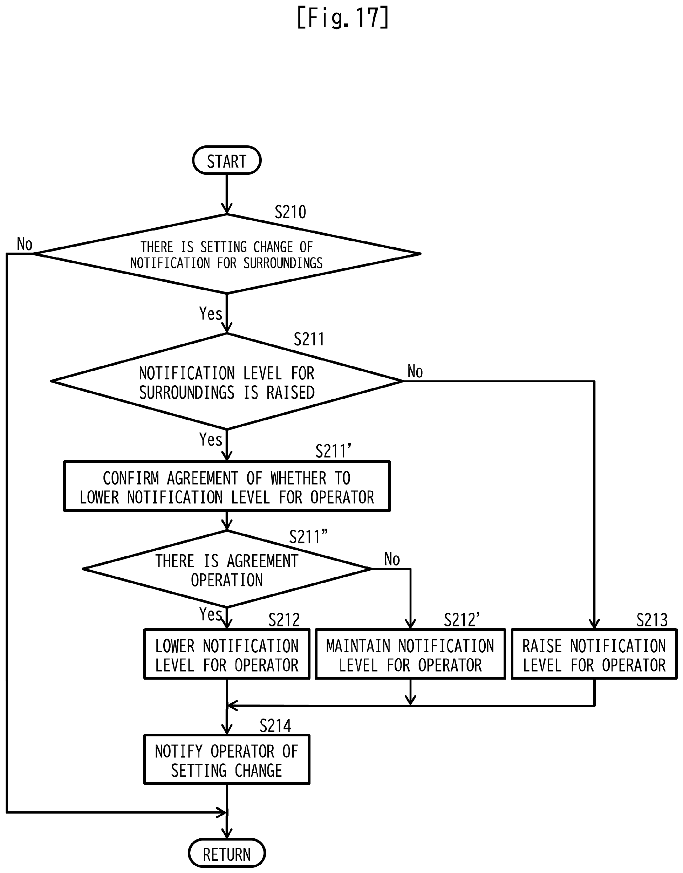

FIG. 17 is a flowchart for depicting another example of a setting procedure of the notification modes of the first notification devices and the second notification devices by the notification controller 100 according to the modified example. In the above embodiment, a case where the notification level of the first notification devices is automatically changed in accordance with the notification level of the second notification devices has been described, but in this example, in a case where the notification level of the first notification devices is lowered in accordance with the change of the notification level of the second notification devices, the notification controller 100 confirms with the operator whether to agree to lowering the notification level of the first notification devices and, when an operation indicating consent to lowering the notification level of the first notification devices is performed by the touch panel 15, lowers the notification level of the first notification devices. The flowchart of FIG. 17 is periodically executed in the same manner as the flowcharts of FIG. 10 and FIG. 15.

The processing contents of Steps S210, S211, S212, S213, and S214 in FIG. 17 are similar to the processing contents of the same numbers in FIG. 15. In the example of FIG. 17, in a case where it is determined in Step S211 that the setting of the notification level of the second notification devices has been raised (Yes), the notification controller 100 moves the procedure from Step S211 to Step S211', and allows the monitor 12 to display a confirmation screen for confirming whether to agree to lowering the notification level of the first notification devices. After the confirmation screen is displayed, the notification controller 100 determines in the subsequent Step S211" whether the operator has performed an operation for agreeing to lowering the notification level of the first notification devices. In a case where an operation for agreement has been performed (Yes), the procedure is moved to Step S212, and in a case where an operation for refusal has been performed (No), the procedure is moved to step S212".

In a case where the procedure is moved to Step S212, the notification controller 100 lowers the setting of the notification level of the first notification devices from the current setting in accordance with the rise of the notification level of the second notification devices as in the example of FIG. 15, and moves the procedure to Step S214. In a case where the procedure is moved to Step S212', the notification controller 100 maintains the setting of the notification level of the first notification devices as the current setting, and moves the procedure to Step S214.

Other steps of FIG. 17 are similar to the example of FIG. 15. In the case of this example, for example, in a case where the notification level of the first notification devices is lowered in accordance with the setting of the notification level of the second notification devices, the operator who does not desire the lowering of the notification level of the first notification devices can refuse this.

### Description of Reference Characters

1: Hydraulic excavator (work machine)
1A: Front work implement
1B: Machine body
1f: Operation room
10a to 10c: Camera (object detection sensor)
11: Speaker (first notification device)
12: Monitor (first notification device)
15: Touch panel (input device)
18: Speaker for surroundings (second notification device)
19: Indicator light for surroundings (second notification device)
100: Notification controller (controller)

## Claims

1. A work machine comprising:
a machine body that has an operation room;
a first notification device that is provided inside the operation room;
a second notification device that is provided outside the operation room;
an input device that sets a notification level of the second notification device; and
a controller that controls the first notification device and the second notification device,
wherein the controller is configured to change a notification level of the first notification device in accordance with the notification level of the second notification device set by the input device.

2. The work machine according to claim 1,
wherein the controller is configured to raise the notification level of the first notification device in a case where the notification level of the second notification device is lowered by the input device.

3. The work machine according to claim 1,
wherein the controller is configured to lower the notification level of the first notification device in a case where the notification level of the second notification device is raised by the input device.

4. The work machine according to claim 1,
wherein an object detection sensor for detecting an object around the machine body is provided, and
the controller controls the notification level of the first notification device and the notification level of the second notification device on a basis of the notification level of the second notification device set by the input device and detection information of the object detection sensor.

5. The work machine according to claim 4,
wherein a plurality of notification modes of the first notification device and the second notification device are stored in the controller for each notification level of the second notification device, and
each of the plurality of notification modes for each notification level of the second notification device is defined in accordance with a positional relation between the object to be detected by the object detection sensor and the machine body.

6. The work machine according to claim 1,
wherein notification modes of the first notification device and the second notification device are stored in the controller for each notification level of the second notification device, and
the notification modes can be changed by the input device.

7. The work machine according to claim 1,
wherein notification modes of the first notification device and the second notification device are stored in the controller for each notification level of the second notification device, and
the notification modes include a mode in which one of the first notification device and the second notification device is turned off.

8. The work machine according to claim 1,
wherein notification modes of the first notification device and the second notification device are stored in the controller for each notification level of the second notification device, and
the notification modes include a mode in which notification by sound of the second notification device is always turned off.

9. The work machine according to claim 4,
wherein the controller is configured to determine whether the object detected by the object detection sensor is a person, and performs notification by the first notification device and the second notification device in a case where it is determined that the detected object is a person.

10. The work machine according to claim 1,
wherein the notification level of the first notification device can be set by the input device, and
the controller is configured to permit setting of the notification level of the first notification device only in a case where the notification level of the first notification device is higher than the already set notification level of the second notification device in a case where an operation for setting the notification level of the first notification device is performed by the input device.

11. The work machine according to claim 1,
wherein the controller is configured to lower the notification level of the first notification device when an operation indicating consent to lowering the notification level of the first notification device is performed by the input device, in a case where the notification level of the first notification device is lowered in accordance with a change in the notification level of the second notification device.

## Amended claims

### Amended claims under Art. 19.1 PCT

**1.** A work machine comprising:
a machine body that has an operation room;
a first notification device that is provided inside the operation room;
a second notification device that is provided outside the operation room;
an input device that sets a notification level of the second notification device; and
a controller that controls the first notification device and the second notification device,
wherein the controller is configured to change a notification level of the first notification device in accordance with the notification level of the second notification device set by the input device, and
the controller is configured to perform at least one of a change to raise the notification level of the first notification device in a case where the notification level of the second notification device is lowered by the input device and a change to lower the notification level of the first notification device in a case where the notification level of the second notification device is raised by the input device.

**4.** A work machine comprising:
a machine body that has an operation room;
an object detection sensor that detects an object around the machine body;
a first notification device that is provided inside the operation room;
a second notification device that is provided outside the operation room;
an input device that sets a notification level of the second notification device; and
a controller that controls the first notification device and the second notification device,
wherein the controller controls the notification level of the first notification device and the notification level of the second notification device on a basis of the notification level of the second notification device set by the input device and detection information of the object detection sensor.

**5.** The work machine according to claim 4,
wherein a plurality of notification modes of the first notification device and the second notification device are stored in the controller for each notification level of the second notification device, and
each of the plurality of notification modes for each notification level of the second notification device is defined in accordance with a positional relation between the object to be detected by the object detection sensor and the machine body.

**6.** The work machine according to claim 1,
wherein notification modes of the first notification device and the second notification device are stored in the controller for each notification level of the second notification device, and
the notification modes can be changed by the input device.

**7.** The work machine according to claim 1,
wherein notification modes of the first notification device and the second notification device are stored in the controller for each notification level of the second notification device, and
the notification modes include a mode in which one of the first notification device and the second notification device is turned off.

**8.** The work machine according to claim 1,
wherein notification modes of the first notification device and the second notification device are stored in the controller for each notification level of the second notification device, and
the notification modes include a mode in which notification by sound of the second notification device is always turned off.

**9.** The work machine according to claim 4,
wherein the controller is configured to determine whether the object detected by the object detection sensor is a person, and performs notification by the first notification device and the second notification device in a case where it is determined that the detected object is a person.

**10.** The work machine according to claim 1,
wherein the notification level of the first notification device can be set by the input device, and
the controller is configured to permit setting of the notification level of the first notification device only in a case where the notification level of the first notification device is higher than the already set notification level of the second notification device in a case where an operation for setting the notification level of the first notification device is performed by the input device.

**11.** The work machine according to claim 1,
wherein the controller is configured to lower the notification level of the first notification device when an operation indicating consent to lowering the notification level of the first notification device is performed by the input device, in a case where the notification level of the first notification device is lowered in accordance with a raise of the notification level of the second notification device.

Statement under Art. 19.1 PCT
In the written opinion of the International Searching Authority, the inventions of claims 2 to 11 were determined to have novelty and an inventive step, and claim 1 was determined not to have novelty and an inventive step on the basis of Document 1.

Therefore, the features of claims 2 and 3, which were determined to have novelty and an inventive step, were added to claim 1, and claims 2 and 3 were deleted. In addition, claim 4, which was determined to have novelty and an inventive step, was rewritten into an independent form. Further, claim 11 was amended to conform to the amended claim 1.
